# EUROPEAN PATENT APPLICATION

(11) **EP 3 798 748 A1**
(43) Date of publication of application: **31.03.2021**
(21) Application number: 19199849.1
(22) Date of filing: 26.09.2019
(51) Int. Cl.: G05B 17/02, G05B 19/414, G05B 15/02

(54) **METHOD AND SYSTEM FOR SECURE EXCHANGE OF DATA ACROSS RESEARCH FACILITIES**

(71) Applicant: Covestro Deutschland AG, 51373 Leverkusen (DE)
(72) Inventor: Heinemann, Torsten, 42799 Leichlingen (DE); Voortmans, Gilbert, B-1981 Zemst (BE)
(74) Representative: Levpat

(57) **Abstract**

A first artificial intelligence unit performs a data analysis, wherein a local first process model is modified according to said data analysis. The modification is expressed as modification data, wherein a first control computer sends the modification data for update purposes to a main server. The main server modifies a main process model due to the modification data and determines amendment data out of the modified central process model. The main server provides the amendment data for update purposes to another control computer. Said another control computer amends a local another process model and at least one setting parameter of a research system according to said amendment data.

## Description

The invention relates to a method and a system for secure exchange of data across research facilities, wherein a first component is investigated by a first research system at a first research facility, wherein the first research system is controlled by a first control computer, wherein the first control computer comprises a local first process model wherein the local first process model comprises a formulation of the first component, wherein the first research system comprises a first artificial intelligence unit capable of machine learning. Another investigation facility comprises another investigation system investigating component another product, wherein another control computer comprises a local another process model wherein the local another process model comprises a formulation of said another component. A main server comprises a main process model, wherein the main process model comprises a main first process model, wherein both the local first process model and the main first process model and are updated in an at least partially synchronous manner.

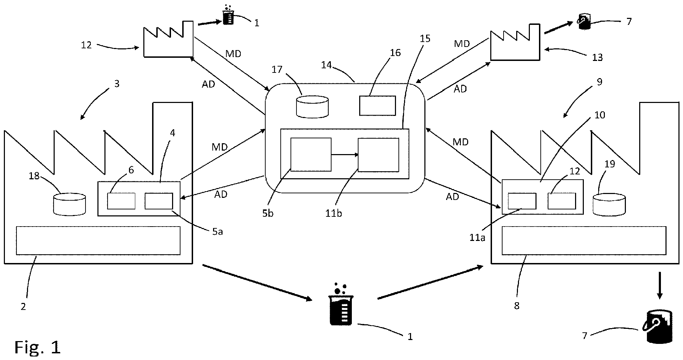

A method and system for exchange of research data is in particular known from Figs. 32 and 33 of EP 1 364 262 B1. Here, the central server also comprises an artificial intelligence unit which is capable of machine learning. In particular, the first control computer sends large amounts of modification data to the central server resulting from the production process of the first production facility. These modification data may in particular comprise data from process control functions and maintenance functions, and may further comprise data from business functions, equipment or device monitoring tools, and work order generation tools. The artificial intelligence unit of the central server then analyzes these data which especially may result in a modified central first process model which can be picked up by the first control computer for updating the local first process model.

Data exchange processes of chemical products like the one of EP 1 364 262 B1 are complex. The results are dependent on a very large number of variables and parameters. It is regularly the case that not only a large portion of these variables and parameters is not measured, either because their relevance is not recognized or measurement would be too difficult, but also that their effect on the product is not known. Sometimes there is no theoretical groundwork for stipulating such a dependency. Sometimes even when a dependency is suspected, there is insufficient data to determine such a dependency with sufficient accuracy. Yet recognizing and acting on such dependencies would be an important step in coming closer to desired properties of the chemical product and in reducing the proportion of defective products. This aspect is even more important with respect to the production of a chemical product which is usually produced in separate chain links of a supply chain. Exchange of research data may take place at different facilities which are distant from each other. For example, parameters of the raw material investigation process at a first research facility can be highly relevant for properties of the resulting chemical product produced at another investigation facility.

Advances in sensor and especially in computing technology have made it possible to not only accumulate very large amounts of data, but also to numerically process those very large amounts of data within reasonable time and at reasonable costs. By applying computational methods such as regression analysis on these large amounts of data, it becomes possible to recognize and control properties of the production process which where hitherto unknown. Thus, even if no theoretical basis for dependencies between process parameters and properties of the final product exists, such dependencies may be discovered by data mining. Even when a theoretical basis does exist, its predictive power may be vastly improved. Such dependencies may then be used for arriving a process model. Further computational analysis with additional data and in light of the process model may then result in iterative extensions, corrections or other amendments to the process model. For such an approach, the best results can be achieved when the sample size, i.e. the amount of data taken, as well as the number of sites and the number of production runs for the data is as large as possible. Thus, it is advantageous to combine as much data as possible from as many sources as possible in order to improve the production of the chemical product.

However, there are safety problems associated with sharing of data since both, process parameters and production results, present highly sensitive data which dissemination can be hugely detrimental from a business perspective. A first motivation example to avoid excessive sharing of data may be that said shared raw data of production results may contain the proportion of product defects. This kind of information is valuable and therefore has a tendency to be spread underhand. Data shared with customers and suppliers always imply the risk that competitors might receive some important data. Secondly and with respect to a third party like a provider of cloud computing or cloud storage, the degree of confidentiality of such shared information would depend on the degree of willingness of this third party. Even if the supplier did everything in his power to keep that data confidential, the mere fact of its sharing would at least increase the vulnerability of that data with respect to cybercrime. Hence, unrestrained information sharing may be advantageous from the point of view of numerical analysis, but is afflicted with serious safety problems. Said safety problems are probably the main reason why sharing of data across production facilities is not described within EP 1 364 262 B1. Also, the advantage of sharing data across production facilities is not disclosed.

It is therefore an object of the invention to provide a method for secure exchange data across research facilities. It is especially an object of the invention to provide a production method and system comprising the analysis of large amounts of data from different sources/facilities while also ensuring that problems related to sharing of data are reduced.

This object is solved using a method for secure production of data research facilities, wherein a first component is investigated by a first research system at a first research facility, wherein the first research system is controlled by a first control computer, wherein the first control computer comprises a local first process model wherein the local frist process model comprises a formulation of the first component, wherein the first research system comprises a first artificial intelligence unit capable of machine learning. Another investigation facility comprises another investigation system investigating component another product, wherein another control computer comprises a local another process model wherein the local another process model comprises a formulation of said another component. A main server comprises a main process model, wherein the main process model comprises a main first process model, wherein both the local first process model and the main first process model and are updated in an at least partially synchronous manner, characterized in that

the first artificial intelligence unit performs a data analysis, wherein the local first process model is modified according to an output of said data analysis of the first artificial intelligence unit, wherein the modification of the local first process model is expressed as modification data, wherein the first control computer sends the modification data to the main server, wherein the main server modifies the main first process model and the main process model due to the modification data, wherein the main server determines amendment data out of the modified main process model resulting from the modification data, wherein the main server provides the amendment data to said another control computer, wherein said another control computer amends said local another process model according to said amendment data, wherein the local another control computer amends at least one setting parameter of said another research system due to the amendment of said local another process model.

The invention is based on the finding that - with respect to the exchange of data across facilities - it is advantageous not to follow the teaching of EP1 364 262 B1 and in particular to avoid sharing of large amounts of data. According to the invention, only few data of the total amount of analyzed data concerning the first research facility need to be shared with said another investigation facility. The reduction of these shared data is done in such a way that number-crunching analysis of raw data mainly takes place within the first facility while only few, reduced data influencing the central process model are shared with the central server and said another facility. This increases safety of shared data and allows at the same time a continuous improvement of the facility spanning research process.

The expression "first component" can refer to a raw material as well as to a product resulting from one or more raw materials which has/have experienced a chemical reaction. The term "another component" can be interpreted in a way that it is a different component compared to the first component but also in such a way that it is the same component compared to the first component.

The first research system and/or said another investigation system preferably comprises a plurality of installations like reactors, chambers, valves, pipes and the like and is in particular constructed for executing at least one chemical reaction of the first component and/or said another component.

The term "facility" advantageously means a building. In an advantageous embodiment, the first facility is different from said another facility. Preferentially, the first facility is remote from said another facility such that the first facility is located at a different street/town/state/country compared to said another facility. It might be useful that the central server is located remotely from the first research facility and/or from said another investigation facility.

The words "computer" and "server" can each especially be understood as a single calculating entity which comprises an own housing or as a plurality of single calculating entities or as a software module located within a single calculating entity comprising a plurality of software modules or as a software module distributed on a plurality of single calculating entities.

The expression "synchronous manner" preferably means that the local first process model and the central first process model are at least over certain time intervals at least partially identical and preferably completely identical. This in particular applies when both process models experienced the same update. The term "updating in a synchronous manner" preferably means a partial or complete synchronization.

According to a very preferred embodiment, said another component is different to the first component. The word "different" in this context preferably means that the first component and said another component belong to the same supply chain but represent different chain links. It is very preferred that the first component and said another component represent an adjacent chain links. In particular, the first component is the raw material of said another component or vice versa. It is preferred that the local/central first process model is different from said local/central another process model. Preferentially, the central process model comprises the central first process model and a central another process model. It is very preferred that an output of the central first process model is an input of the central another process model. Advantageously, the central another process model and said local another process model are updated in a synchronous manner. The central/local another process model preferably represents the production process of said another product. It is advantageous that the main server modifies - due to the modification of the central first process model - the output of the main first process model and/or the input of the main another process model and/or the main another process model itself and/or the output of the main another process model and/or the main process model. It is very preferred that the main server determines the amendment data out of the modified central another process model.

According to an embodiment, said another component is the same component like the first component. It might be that the first component and said another component belong to the same chain link of a supply chain. The term "same" in this context preferably means that the first component can be substituted by said another component for use within a resulting chemical product. The word "same" in this context advantageously means that the local first process model and said local another process model refer to the same chemical reaction. Preferentially, the local first process model and the local another process model comprise the same chemical equation but may have different parameters. It may also be that at least one parameter and preferably several parameters of the local first process model and the local another process model is/are the same for at least a certain, overlapping time interval. It is possible that the main process model only comprises the main first process model and that the main process model in particular does not comprise a main another process model. Preferably, the main process model is the main first process model so that more preferably the output of the main first process model is the output of the main process model. It might be that the main server determines the amendment data out of a modified main first process model. In particular, it is possible that the amendment data are identical to the modification data.

According to a very preferred embodiment, the first component is a raw material of said another component. The main process model advantageously comprises the main first process model and a main another process model. The main another process model and the local another process model preferentially both represent the production process of said another product. Preferably, an output of the main first process model is an input of the main another process model. It is preferred that the output of the main first process model comprises at least one material parameter and preferably a plurality of material parameters of the first component. The output of the main first process model might comprise production data of the first component line like setting parameters or environmental parameters of the first research system like temperature or humidity.

Very advantageously, the local/main first/another process model comprises at least one chemical equation representing a chemical reaction. The main/local first/another process model preferably has at least one input and/or at least one output. Said input preferably comprises at least one material parameter of a raw material and/or data of the production process of a raw material like setting or environmental parameters. Said at least one output preferably comprises at least one material parameter of the first/another component.

It is very preferred that the main server comprises at least one material parameter range and preferably a plurality of material parameter ranges. Said at least one material parameter range is preferably part of a specification of the first and/or said another product and very preferred of said another product. The main server advantageously compares said at least one material parameter range with an output of the main first process model and/or of the main another process model and/or of the main process model. It is very preferred that - in case of not complying with said material parameter range - the main server recalculates the main process model/the main first process model/the main another process model in order to comply with said at least one material parameter range. Very preferably, the main server amends the main first process model/the main another process model/the main process model according to said recalculation, wherein the amendment is preferably expressed as amendment data and further preferably sent to the first control computer and/or to said another control computer.

According to a very advantageous embodiment, the main server comprises at least one setting parameter range of the first research system and/or of said another research system. Said at least one setting parameter range preferably defines the possible range of an according parameter which is given due to a first production line and/or due to another production line. For example, the setting parameter is a temperature within a reactor, wherein the reactor provides a possible minimum temperature as well as a possible maximum temperature which both together define the according setting parameter range. It is very preferred that said at least one setting parameter range reflects an according technical possibility within the first production line and/or said another production line.

Preferentially, the modification data comprise a before/after difference of the local first process model. It is preferred that the modification data represent a reduction of a database of the data analysis of the first artificial intelligence unit. A factor of said data reduction amounts preferably to at least 10³, more preferably 10⁶ and most preferably 10⁹. Advantageously, the main server is able to substitute a part of or the whole main process model in order to update the main process model by using only said modification data. It is very preferred that the main server does not need to perform data mining in order to apply the modification data to the main process model. According to an advantageous embodiment, the modification data comprise only data relating to the main/local first process model. It may be that the modification data only comprise a before/after difference of the main/local first process model.

Preferentially, the amendment data comprise a before/after difference of the main another process model. It might be that the amendment data comprise a part of or the whole updated main another process model. Advantageously, the local another control computer is able to substitute a part of or the whole local another process model by using only said amendment data. It is preferred that the local another control computer does not need to perform data mining in order to apply the amendment data to the local another process model. Preferably, the amendment data comprise only data relating to the local another process model. It may be that the amendment data only comprise a before/after difference of the local another process model.

It is preferred that the main server comprises a main artificial intelligence unit capable of machine learning. The main artificial intelligence unit may comprise a neural network and preferably a deep neural network and more preferably a deep recurrent neural network. It is advantageous that the main server comprises a main database, wherein the main database preferably comprises historical data. Said historical data might refer to earlier versions of the main process model. The main database may also comprise said at least one material parameter range and/or said at least one setting parameter range as well as earlier versions of these ranges. The main server advantageously has access to publically available data sources like the internet. It is very preferred that the main artificial intelligence unit performs a data analysis based on data mining of data sets. The data sets may be provided by the main database and/or by publically available data sources. Publically available data sources may refer to weather data, commodity price data and general business data. It is possible that the main artificial intelligence unit can initially start a data mining resulting in an amendment of the main process model and in at least one according amendment at the first research system and/or at said another investigation system. It is preferred that the main server/the main artificial intelligence unit is triggered by modification data or the first control computer. According to a preferred embodiment, the data analysis of the first/another artificial intelligence unit is a data mining procedure. It is possible that the first/another artificial intelligence unit has access to all data sources of the first/another research investigation facility and in particular to data from process control functions, maintenance functions, business functions, equipment or device monitoring tools and/or work order generation tools. Preferably, the first/another artificial intelligence unit has also access to publically available data. According to an advantageous embodiment, the first/another production facility comprises a first/another database, wherein the first/another database preferably comprises historical data of the first/another facility. Said historical data of the first/another production facility preferentially comprise earlier setting parameters, earlier measurement data and earlier material parameters of the first/another product. The data mining procedure of the first/another artificial intelligence unit is preferably directed on an improvement of the production process of the first/another production line. The first/another artificial intelligence unit advantageously comprises a neural network, preferentially a deep neural network and very preferentially a deep recurrent neural network.

It is preferred that the first component and/or said another component is a polymer. It is advantageous that the first component is a raw material for said another component/said polymer. Preferentially, said first/another research system / investigation system comprises installations for performing a polymerization. The polymerization can be a step-growth or a chain growth polymerization. The step-growth polymerization might be a polycondensation or a polyaddition. The chain-growth polymerization can be a radical or a coordination or a cationic or an anionic polymerization. The first component/the raw material/another component can be, for example, a polyethylene, an epoxy, a polycarbonate, a polyethylene terephthalate or a polydimethylsiloxane. The first/another component is preferably a monomer, for example an ethylene gas, an epoxide monomer, bisphenol A, terephthalic acid or dimethylsilicon dichloride. The first component/the raw material/another component can also be a catalyst.

It is possible that a first intranet is allocated to the first research facility and preferably located within the first research facility. It might be that another intranet is allocated to said another investigation facility and preferably located within said another investigation facility. The first/said another research/investigation facility preferably comprises the first/said another research system and/or the first/said another control computer. Preferably, the first/another intranet comprises first/another elements, in particular the first/another artificial intelligence unit and/or the first/another control computer and/or the first/another database. Advantageously, the first/another intranet is secured by a firewall. It is also advantageous that the central server is secured by a firewall. The communication and in particular the exchange of modification data and/or amendment data between the main server/the first control computer/said another control computer is preferably secured cryptographically, for example on the basis of IPsec. It is possible that the modification data and the amendment data are content of a blockchain. Advantageously, the modification data and/or the amendment data of a certain update represent a block of the blockchain. Preferentially, each block comprises a cryptographic hash value.

Said object is solved with a system for secure exchange of a data across facilities, comprising a first research facility having a first control computer and a first research system for investigation a first component, wherein the first control computer comprises a local first process model wherein the local frist process model comprises a formulation of the first component, wherein the first control computer comprises a first artificial intelligence unit capable of machine learning, comprising another investigation facility having another control computer and another investigation line for investigation another component, wherein said another control computer comprises a local another process model wherein the local another process model comprises a formulation of said another component,

comprising a main server having a main process model, wherein the main process model comprises a main first process model, wherein the system is constructed to update the local first process model and the main first process model in an at least partially synchronous manner,
characterized in that
the system is constructed in such a way that the first artificial intelligence unit performs a data analysis, wherein the local first process model is modified according to an output of said data analysis of the first artificial intelligence unit, wherein the modification of the local first process model is expressed as modification data, wherein the first control computer sends the modification data for update purposes to the main server, wherein the system is constructed in such a way that the main server modifies the main first process model and the main process model due to the modification data, wherein the main server determines amendment data out of the modified main process model resulting from the modification data, wherein the main server provides the amendment data to said another control computer, wherein the system is constructed in such a way that said another control computer amends said local another process model according to said amendment data, wherein the local another control computer amends at least one setting parameter of said another investigation system due to the amendment of said local another process model.

The invention also teaches a method for exchanging data between a first site and a geographically separated second site, the method comprising the steps of:
providing a first data set at the first site, wherein the first data set comprises conditions for and results of a plurality of chemical experiments, the chemical experiments relating to the processing of at least one starting material to at least one product;
providing a second data set at the second site, wherein the second data set comprises conditions for and results of a plurality of chemical experiments, the chemical experiments relating to the processing of at least one starting material to at least one product;
wherein in the first data set and the second data set:
   a starting material in one data set is also a starting material in the other data set,
   a starting material in one data set is a product in the other data set or
   a product in one data set is also a product in the other data set or
   a product in one data set is the starting material in the other data set;
   training, at the first site, a first machine learning algorithm to correlate conditions for with results of chemical experiments in the first data set,
   thereby obtaining a trained first algorithm;
   training, at the second site, a second machine learning algorithm to correlate conditions for with results of chemical experiments in the second data set,
   thereby obtaining a trained second algorithm,
   wherein in the trained second algorithm at least one changed numerical parameter exists which represents a correlation of conditions for with results of chemical experiments in the second data set and which is different than the corresponding parameter of the second algorithm before the training;
   transferring the at least one changed numerical parameter from the second site to the first site and
   modifying the first machine learning algorithm with the at least one changed numerical parameter.

The invention furthermore teaches a method of modifying a machine learning algorithm at a first site with data from a geographically separate second site, the method comprising the steps of:
providing a first data set at the first site, wherein the first data set comprises conditions for and results of a plurality of chemical experiments, the chemical experiments relating to the reaction of at least one starting material to at least one product;
training, at the first site, a first machine learning algorithm to correlate conditions for with results of chemical experiments in the first data set,
thereby obtaining a trained first algorithm;
receiving, via an input interface at the first site, at least one changed numerical parameter from the second site and
modifying the first machine learning algorithm with at least one changed numerical parameter,
wherein
at the second site there is provided a second data set, wherein the second data set comprises conditions for and results of a plurality of chemical experiments, the chemical experiments relating to the reaction of at least one starting material to at least one product;
at the second site a second machine learning algorithm is trained to correlate conditions for with results of chemical experiments in the second data set,
thereby obtaining a trained second algorithm,
wherein in the trained second algorithm at least one changed numerical parameter exists which represents a correlation of conditions for with results of chemical experiments in the second data set and which is different than the corresponding parameter of the second algorithm before the training;
and wherein in the first data set and the second data set:
   a starting material in one data set is also a starting material in the other data set,
   a starting material in one data set is a product in the other data set or
   a product in one data set is also a product in the other data set.

The invention is explained by means of a figure showing a preferred embodiment, wherein the figure is a block diagram highlighting a method and a system according to the invention.

The only figure visualizes a first component 1 which is investigated by a first research system 2 of a first research facility 3. The first research facility 3 comprises a first control computer 4 having a local first process model 5a and a first artificial intelligence unit 6. The first research facility further comprises a first database 18 as well as further computing units providing maintenance functions, business functions, labor functions, and internet functions (not shown). All computing elements 4, 6, 18 of the first research facility 3 are part of a first intranet which is secured via a firewall with respect to the outside of the first production facility 3. The research system 2 in particular comprises installations (not shown) like reactors, pipes, valves, and chambers in order to produce the first product 1. The first research system 2 further comprises monitoring devices for monitoring the production of the first component 1 as well as control devices for controlling setting parameters of the production research process of the first research system 2.

The first component 1 of this embodiment is a polyol resin which is delivered to another investigation facility 9 with another investigation system 8. The investigation facility 9 uses the first component 1 as a raw material for production of another component 7 which is in this case a polyurethane granulate. Said another investigation system 8 comprises installations for producing said another component. The another investigation facility 9 comprises another intranet, having another control computer 10 with another artificial intelligence unit 12 and another database 19.

According to this embodiment, the system might comprise another research facilities 12, 13. One of said another research facilities 12, 13 might produce the first component 1, while the other one of said another research facilities 12, 13 might produce said another component 7 as is shown within the figure.

The system further comprises a main server 14 having a main process model 15, a main intelligence unit 16 and a main database 17. The central process model 15 itself comprises a main first process model 5b and a main another process model 11b. In this example, the main first process model 5b is a copy of the local first process model 5a, while the main another process model 11b is a copy of the local another process model 11a. An output of the main first process model 5b comprises a list of material parameters of the first component 1. This list may comprise, for example, the exact composition of the first component 1, production conditions of the first component 1 and certain material parameters like hardness, density and chemical resistance. This list in particular comprises all the production data of the first product which influence or might influence the production process of said another component 7.

The first artificial intelligence unit 6 is capable of machine-learning and comprises a deep recurrent neural network. The first artificial intelligence unit 6 has access to the first database 18 comprising historical data of the first research facility 3. These historical data may comprise earlier control commands to the research system 2, production measurements, measurements of humidity and temperature within the facility, business data like orders from customers or to suppliers, labor data and the like. The first artificial intelligence unit 6 may also have access to publically available data like commodity prices, weather data like weather predictions and the like. Thus, the first artificial intelligence unit 6 has access to a large amount of data and performs data analysis in the form of data mining trying to recognize certain dependencies of the production process with respect to the aforementioned large amount of data. It may happen from time to time - for example on a monthly, weekly or daily basis - that such a dependency is discovered. This in turn might result in a certain modification of the production process so that the first control computer 4 might recognize an improvement possibility with respect to said dependency. The first control computer 4 then modifies for example a setting parameter of the research system 2 and also modifies accordingly the local first process model 5a. This modification of the local first process model 5a is expressed as modification data MD.

The first control computer 4 then sends said modification data MD - which in this example only comprise a before/after difference of the local first process model 5a - to the main server 14. The main server 14 recognizes that the incoming modification data MD imply a modification of the main first process model 5b (and thus also of the main process model 15). The main server 14 modifies the main first process model 5b accordingly which also results in a modified output of the main first process model 5b comprising modified material parameter data of the first component 1. This in turn results in an amended input into the main another process model 11b.

In some cases, said amended input of the main another process model 11b does not imply that the main another process model 11b has to be amended. This in particular might be the case if an output of the main another process model 11b comprises a list of material parameters of said another component 7 which are all within a predetermined range. These ranges might in particular result from certain product specifications of a contract with a customer of said another production facility.

In some cases, however, it might happen that said output of the main process model 11b is not in line with said ranges/specification which is detected by the main server 14. The main server 14 then recalculates the main another process model 11b under the condition of the modified output of the main first process model 5b and the ranges of the material parameters which have to be met. This can result in an amended main another process model 11b in which one or more setting parameters have been amended in order to meet said ranges of the material parameter of said another component 7. The main server 14 in particular uses the main artificial unit 16 in order to amend the main another process model 11b. Finally, the main server 14 determines a before/after difference of the main another process model 11b which form amendment data AD and which are sent to said another control computer 10.

Said another control computer 10 then amends the local another process model 11a according to the amendment data AD and in particular amends the aforementioned setting parameters for said another investigation system 8 in order to comply with the material parameter ranges. Thus, said another investigation system 8 is now updated and adapted to the first research system 2. This in particular happened without sharing of large data amounts but under the benefit of data mining.

It may happen that two first research facilities 3, 12 deliver the first component 1 to said another investigation facility 9. In this case, modification data MD coming from the first research facility 3 will result in an amendment of the main first process model 5b and in turn in according amendment data AD. The main server 14 then sends these amendment data AD to the further first research facility 12 for update purposes. The further first research facility 12 might also comprise the same elements as the first research facility 3. Likewise, amendment data AD concerning the main another process model 11b are sent to a further another production facility 13 if the main server detects an amendment of the main another process model 11b. It is of course possible that also the further first research facility 12 and the further another investigation facility 13 perform data mining and therefore might change their respective process models resulting in modification data MD sent to the main server 14. This in turn might imply the aforementioned consequences described with respect to the first research facility 3 and said another investigation facility 9.

Another example of the invention according to the system is that a first research facility 9 receives an order of a customer comprising significantly different material parameter specifications for a first component 7. A first control computer 10 including a first artificial intelligence unit 12 now tries to modify the local first process model 11a in order to achieve said significantly different material parameters. It might be the case that even with significant changes of the setting parameters of said first research system 8, said first research facility 9 cannot achieve the significantly different but nevertheless required material parameters of a customer with a given raw material 1 (another product). Accordingly, the first control computer 10 sends said list of significantly different material parameters (= modification data) to the central server 14.

The main server 14 replaces the output of the main process model 15 with said significantly different list of material parameters of the first component 7. The main server 14 then recalculates the main process model 15 and in particular a main another process model 5b whether it is possible to achieve the desired output of the main process model 15. If this is the case, the main server 14 amends the main another process model 5b concerning the raw material 1 and/or the main first process model 11b in order to comply with said list of significantly different material parameters of said first component 7.

The main server 14 then preferably determines before/after differences of the main another process model 5b and/or the main first process model 11b and sends according amendment data AD to another control computer 4 and/or to said first control computer 10. In a last step, said another control computer 4 and/or said first control computer 10 amend the local another process model 5a and/or the local first process model 11a including the according setting parameters for said another investigation system 2 and/or the first research system 8.

## Claims

1. Method for secure exchange of data across research facilities,
wherein a first component (1, 7) is investigated by a first research system (2, 8) at a first research facility (3, 9), wherein the first research system (2, 8) is controlled by a first control computer (4, 10), wherein the first control computer (4, 10) comprises a local first process model (5a, 11a), wherein the local first process model (5a, 11a) comprises a formulation of the first component (1, 7), wherein the first research system (2, 8) comprises a first artificial intelligence unit (6, 12) capable of machine learning,
wherein another investigation facility (9, 3, 12, 13) comprises another investigation system (8, 2) investigating another component (7, 1), wherein another control computer (10, 4) comprises a local another process model (11a, 5a), wherein the local another process model (5a, 11a) comprises a formulation of said another component (7, 1),
wherein a main server (14) comprises a main process model (15), wherein the main process model (15) comprises a main first process model (5b, 11b), wherein the local first process model (5a, 11a) and the main first process model (5b, 11b) are updated in an at least partially synchronous manner,
**characterized in that**
the first artificial intelligence unit (6, 12) performs a data analysis, wherein the local first process model (5a, 11a) is modified according to an output of said data analysis of the first artificial intelligence unit (6, 12), wherein the modification of the local first process model (5a, 11a) is expressed as modification data (MD), wherein the first control computer (4, 10) sends the modification data (MD) to the main server (14),
wherein the main server (14) modifies the main first process model (5b, 11b) and the main process model (15) due to the modification data (MD), wherein the main server (14) determines amendment data (AD) out of the modified main process model (15) resulting from the modification data (MD), wherein the main server (14) provides the amendment data (AD) to said another control computer (10, 4),
wherein said another control computer (10, 4) amends said local another process model (11a, 5a) according to said amendment data (AD), wherein the local another control computer (10, 4) amends at least one setting parameter of said another research system (8, 2) due to the amendment of said local another process model (11a, 5a).

2. Method according to claim 1, wherein said another component (7, 1) is different to the first component (1, 7), wherein it is preferred that the first component (1, 7) and said another component (7, 1) represent adjacent chain links of a supply chain, wherein - advantageously - the first component (1, 7) is a raw material of said another component (7, 1).

3. Method according to claim 1 or 2, wherein the main process model (15) comprises a main another process model (11b, 5b), wherein it is preferred that an output of the main first process model (5b, 11b) is an input of said main another process model (11b, 5b).

4. Method according to claim 1, wherein said another component (7, 1) is the same component like the first component (1, 7), wherein it is preferred that the first component (1, 7) and said another component (7, 1) belong to the same chain link of a supply chain.

5. Method according to one of the claims 1 to 4, wherein the main first process model (5b, 11b) comprises at least one chemical equation representing a chemical reaction.

6. Method according to one of the claims 1 to 5, wherein the main server (14) comprises at least one range of a material parameter, wherein it is preferred that the at least one material parameter range is part of a specification of the first component (1, 7) and/or said another component (7, 1), wherein - advantageously - the main server (14) recalculates the modified main process model (15) in case that a calculated, modified material parameter is not within said material parameter range before said at least one setting parameter of said another research system (8, 2) is amended.

7. Method according to one of the claims 1 to 6, wherein the main server (14) comprises at least one setting parameter range of the first research system (2, 8) and/or of said another research system (8, 2), wherein the setting parameter range advantageously defines the technical possible range of a setting parameter of said another research system (8, 2), wherein it is preferred that the main server (14) recalculates the modified main process model (15) in case that a calculated, modified setting parameter of said another research system (8, 2) is not within said setting parameter range before said at least one setting parameter of said another research system (8, 2) is amended.

8. Method according to one of the claims 1 to 7, wherein the modification data (MD) and/or the amendment data (AD) comprise a before/after difference of the local first process model (5a, 11a), wherein it is preferred that the modification data (MD) and/or the amendment data (AD) represent a reduction of the amount of data used for said data analysis of the first artificial intelligence unit (6, 12).

9. Method according to one of the claims 1 to 8, wherein the main server (14) comprises a main artificial intelligence unit (16), wherein it is preferred that the main artificial intelligence unit (16) is fed with modification data (MD) of the first research system (2, 8) and/or of said another research system (8, 2).

10. Method according to one of the claims 1 to 9, wherein said another research system (8, 2) comprises another artificial intelligence unit (12, 6) capable of machine learning.

11. Method according to one of the claims 1 to 10, wherein the data analysis of the first artificial unit (6, 12) is a data mining procedure.

12. Method according to one of the claims 1 to 11, wherein said another component (7, 1) is a polymer.

13. Method according to one of the claims 1 to 12, wherein the main server (14) is located remotely from the first research facility (3, 9) and/or from said another research facility (9, 3), and/or wherein the main server (14) is transferred from the first research facility (3, 9) to said another research facility (9, 3) or vice versa.

14. Method according to one of the claims 1 to 13, wherein a first intranet is allocated to the first research facility (3, 9).

15. System for secure exchange of data across research facilities,
comprising a first research facility (3, 9) having a first control computer (4, 10) and a first research system (2, 8) for investigating a first component (1, 7), wherein the first control computer (4, 10) comprises a local first process model (5a, 11a) wherein the local first process model (5a, 11a) comprises a formulation of the first component (1, 7), wherein the first control computer (4, 10) comprises a first artificial intelligence unit (6, 12) capable of machine learning,
comprising another research facility (3, 9) having a another control computer (4, 10) and another research system (2, 8) for investigating another component (1, 7), wherein said another control computer (4, 10) comprises a local another process model (5a, 11a) for determining control commands to said another research system (2, 8),
comprising a main server (14) having a main process model (15), wherein the main process model (15) comprises a main first process model (5b, 11b), wherein the system is constructed to update the local first process model (5a, 11a) and the main first process model (5b, 11b) in an at least partially synchronous manner,
**characterized in that**
the system is constructed in such a way that the first artificial intelligence unit (6, 12) performs a data analysis, wherein the local first process model (5a, 11a) is modified according to an output of said data analysis of the first artificial intelligence unit (6, 12), wherein the modification of the local first process model (5a, 11a) is expressed as modification data (MD), wherein the first control computer (4, 10) sends the modification data (MD) to the main server (14),
wherein the system is constructed in such a way that the main server (14) modifies the main first process model (5b, 11b) and the main process model (15) due to the modification data (MD), wherein the main server (14) determines amendment data (AD) out of the modified main process model (15) resulting from the modification data (MD), wherein the main server (14) provides the amendment data (AD) to said another control computer (10, 4),
wherein the system is constructed in such a way that said another control computer (10, 4) amends said local another process model (11a, 5a) according to said amendment data (AD), wherein the local another control computer (10, 4) amends at least one setting parameter of said another research system (8, 2) due to the amendment of said local another process model (11a, 5a).
